Europäisches Patentamt

European Patent Office

Office européen des brevets

(19)

(11) Veröffentlichungsnummer: **0 068 400**
**B1**

(12) # EUROPÄISCHE PATENTSCHRIFT

(45) Veröffentlichungstag der Patentschrift:
27.02.85

(21) Anmeldenummer: **82105444.2**

(22) Anmeldetag: **22.06.82**

(51) Int. Cl.⁴: **B 22 D 11/128,** B 21 B 43/00, B 21 B 43/02, B 65 G 25/02, B 65 G 47/82, B 65 G 47/54, B 65 G 47/32

(54) **Vorrichtung zum Querfördern von Strangabschnitten in einer Mehrstranggiessanlage.**

(30) Priorität: **30.06.81 CH 4283/81**

(43) Veröffentlichungstag der Anmeldung:
**05.01.83 Patentblatt 83/1**

(45) Bekanntmachung des Hinweises auf die Patenterteilung:
**27.02.85 Patentblatt 85/9**

(84) Benannte Vertragsstaaten:
**FR GB IT**

(56) Entgegenhaltungen:
**DE - A - 2 026 268**
**DE - A - 2 322 325**
**DE - A - 2 744 770**
**DE - A - 3 023 493**
**DE - B - 1 280 792**
**DE - B - 1 816 914**

(73) Patentinhaber: **CONCAST SERVICE UNION AG, Tödistrasse 7, CH-8027 Zürich (CH)**

(72) Erfinder: **Ros Navarro, Carlos, Dos de Mayo 198 - 2020, Barcelona (ES)**

(74) Vertreter: **Fiala, Ferdinand et al, CONCAST SERVICE UNION AG Tödistrasse 7, CH-8027 Zürich (CH)**

ACTORUM AG

## Beschreibung

Die Erfindung betrifft eine Querfördervorrichtung nach dem Oberbegriff des Anspruchs 1, die zum Stand der Technik gehört.

Es sind Querfördervorrichtungen verschiedenster Bauarten bekannt, welche sich prinzipiell in zwei Kategorien einteilen lassen. Die erste Kategorie umfasst Vorrichtungen, welche nur einem einzigen Giessstrang zugeordnet sind, wobei bei Stranggiessanlagen mit mehreren Strängen auch mehrere Querfördervorrichtungen vorhanden sind, welche die fertigen Strangabschnitte, z.B. Knüppel oder Vorblöcke, auf verschiedene Kühlbette fördern. Derartige Anlagen sind kostenmässig ungünstig. Falls diese Bauart nicht durch andere Bedingungen gefordert wird, werden heute Querfördervorrichtungen verwendet, welche gleichzeitig je einen Strangabschnitt pro Strang quer zur Rollrichtung der abgetrennten Strangabschnitte ausfördern.

Hierzu gibt es verschiedene Ausführungen, beispielsweise wird mit einer geschlossenen Laufkette mit einem Greifer der äusserste Strangabschnitt erfasst und querverschoben, bis alle Strangabschnitte nebeneinander seitlich von den Rollgängen zu liegen kommen.

Aus der DE-OS Nr. 1816914 beispielsweise ist eine Querfördervorrichtung für Knüppel bekannt geworden, welche einen von einem geschlossenen Seilzug hin und her bewegbaren Wagen mit einer der Anzahl der Stränge entsprechenden Zahl von Transportklinken aufweist. Bei der Querverschiebung des Wagens werden die Transportklinken von einer Nichteingriffsstellung in eine Eingriffsstellung hochgeklappt, und zwar derart, dass zuerst die letzte Klinke und erst durch das Erfassen eines Knüppels durch diese letzte Klinke die nächstvordere Klinke hochgeklappt wird und so weiter, bis alle Klinken je einen Knüppel erfasst haben, welche derart gemeinsam in einer Abräumbewegung von den Rollgängen auf ein Warteoder Kühlbett geschoben werden.

All diesen Querfördereinrichtungen ist der Nachteil gemeinsam, dass die Abräumbewegung über die gesamte Breite der Mehrstranggiessanlage erfolgt, und bei vernünftiger Arbeitsgeschwindigkeit eine Abräumzeit erfordert, welche bereits in die Grössenordnung der Taktzeit beim Schneiden der Knüppel in kurze Strangabschnitte reicht. Dieser Nachteil könnte durch Erhöhen der Abräumgeschwindigkeit kompensiert werden, doch würde dies einen beachtlichen Mehraufwand an Energie und Maschinenkosten bedeuten.

Um dies zu vermeiden, hat die Erfindung die Aufgabe, eine Vorrichtung zum Querfördern von Strangabschnitten in einer Mehrstranggiessanlage bereitzustellen, die ohne Erhöhung der Bewegungsgeschwindigkeit der Strangabschnitte beim Abräumen nur kurze Zeitphasen für die Querbewegung der Strangabschnitte benötigt.

Diese Aufgabe wird erfindungsgemäss durch die Vorrichtung der eingangs genannten Art gelöst, welche dadurch gekennzeichnet ist, dass zwischen den Ausförderlinien mindestens eine Zwischenposition für Strangabschnitte vorgesehen ist, in die der Strangabschnitt durch einen ersten Teilförderhub aus seiner Ausförderlinie gebracht und durch mindestens einen weiteren Hub über mindestens eine weitere Ausförderlinie auf das Kühlbett querverschoben wird, die Transportklinken auf z.T. relativ zueinander bewegbaren Transportwagen angeordnet sind, und dass die Summe der Transportklinken in einer Klinkenreihe der Anzahl Ausförderlinien für Giessstränge und der Anzahl Zwischenpositionen entspricht.

Die Transportklinken sind um zu den Längsrichtungen der Strangabschnitte parallele Achsen schwenkbar gelagert und werden mittels Federn oder durch entsprechende Gegengewichte in eine die Strangabschnitte ergreifende senkrechte Lage gebracht. Beim Rücktransport der Klinken nach einem Querförderhub werden diese durch Verschwenken in eine waagrechte Lage unter den in Querförderrichtung gesehen vorderen Strangabschnitten hindurch in die Ruhestellung zurückgezogen.

Die Transportklinken sind in Gruppen ansteigender Anzahl — beginnend mit 1 für die in Querförderrichtung erste Gruppe bis zur Anzahl der Giessstränge — unterteilt, wobei jede Gruppe von Transportklinken an einem ihr zugeordneten Transportwagen angeordnet ist; die Zahl der Transportwagen entspricht der Zahl der Stränge.

Zur Erzeugung der Querförderhübe ist eine Hubvorrichtung vorgesehen, welche an dem in Querförderrichtung gesehen letzten Transportwagen angreift.

Die Übertragung der Querbewegung des letzten Transportwagens auf die übrigen erfolgt mittels eines ein Langloch aufweisenden Führungshebels, wobei entweder der letzte oder der vorletzte Transportwagen im Langloch gelagert ist. Der erste bis vorletzte Transportwagen sind über eine Stange starr verbunden. Durch das Langloch ist eine Relativbewegung zwischen letztem und vorletztem Transportwagen möglich, deren Länge gleich ist dem Abstand zwischen zwei Strängen geteilt durch die Anzahl der Stränge.

Ferner weist der letzte Transportwagen eine zusätzliche verstärkte Transportklinke zum Abschieben mehrerer, vom letzten Transportwagen im vorhergehenden Hub im Bereich der Endstellung der Transportklinken abgelegter Strangabschnitte auf. Damit die geschnittenen, neu ankommenden Knüppel die Querförderung nicht stören, werden die während eines Querförderhubes ankommenden Knüppel mittels einer durch eine Steuereinrichtung von einer Ruhe- in eine Arbeitslage bringbaren Haltevorrichtung ausserhalb des Bereiches der Querförderung gehalten.

Entsprechend einer Ausführungsart der Erfindung sind alle Transportklinken auf einem gemeinsamen Träger angeordnet und der Verschiebeweg = $s' = d \cdot N/(N+1)$.

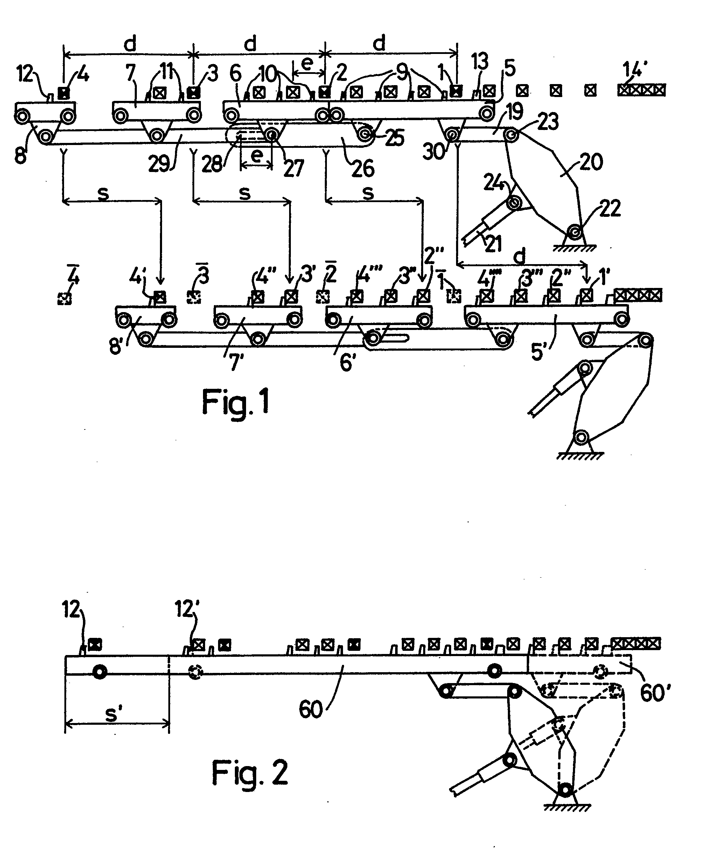

Die Erfindung ist anhand von Figuren beispielsweise dargestellt. Fig. 1 zeigt eine erfindungsgemässe Querfördervorrichtung in zwei verschiedenen Arbeitsphasen, wobei die Verschiebungen von Strangabschnitten des besseren Verständnisses wegen mit Pfeilen dargestellt sind. Fig. 2 zeigt eine Art der erfindungsgemässen Querfördervorrichtung, wobei alle Klinken den gleichen Verschiebeweg aufweisen.

Das erfindungsgemässe Verfahren besteht im Prinzip darin, nicht wie bisher üblich mit einer einzigen Abräumbewegung über die ganze Mehrstranganlage zu fahren, sondern die einzelnen Strangabschnitte innerhalb eines Teilförderhubes von ihren Ausgangslagen, welche entsprechend den dargestellten Strängen 1-4 einer Vierstrangknüppelanlage in gleichen Abständen d zueinander ankommen, in den Bereich zwischen ihrer Ausgangslage und derjenigen des benachbarten Stranges (in Querförderrichtung) zu bringen. In der dargestellten Anlage weist die Querförderrichtung von links nach rechts. Beim nächstfolgenden Teilförderhub werden die bereits einmal verschobenen Knüppel, welche sich nun zwischen zwei Strängen n und n−1 befinden (n bedeutet irgendeine der Zahlen 1-4 der Stränge), zwischen die Stränge n−1 und n−2 weiter verschoben, und die neu angekommenen Knüppel werden wieder wie oben verschoben. Dies geht so lange weiter, bis die Knüppel nach der jeweiligen Anzahl von Teilförderschritten, welche der Ordnungszahl des Stranges entspricht, aus dem sie kommen, seitlich von den Ausförderrollgängen zu liegen kommen und dann anschliessend weiter nach rechts geschoben werden.

In Fig. 1 ist die Querfördervorrichtung in zwei verschiedenen Stellungen dargestellt. Die obere Stellung entspricht der Ruhestellung und die untere der Endstellung. Wenn nicht abgeräumt wird, befindet sich die Vorrichtung in der Ruhestellung, in der die Transportwagen 5-8 so angeordnet sind, dass die jeweils am weitesten rechts stehende Transportklinke der Gruppen 9-12 mit geringem, das Hochklappen der Klinken gewährleistendem Abstand links von den Strängen 1-4 stehen. Die Transportwagen 6, 7 und 8 sind durch ein Gestänge 29 starr miteinander verbunden und können sich nur gleichzeitig bewegen. Der Transportwagen 5 ist mit dem Wagen 6 durch einen Führungshebel 26 verbunden, welcher ein Langloch 28 aufweist, in dem der Anlenkpunkt 27 mit einer Bewegungsfreiheit der Länge e geführt ist. Demselben Zweck würde auch dienen, wenn das Lager 25 des Transportwagens 5 in einem Langloch geführt wäre. Ein zweites Lager 30 des Wagens 5 ist über zwei Schwenkhebel 19 und 20, die über ein Gelenk 23 miteinander verbunden sind, an eine mit dem Hebel 20 mittels eines Gelenkes 24 verbundene Stange 21 gekoppelt, welche durch einen nicht dargestellten Hydraulikkolben oder einen Exzenter derart angetrieben werden kann, dass sie den Schwenkhebel 20 in die in der unteren Darstellung der Zeichnung gezeigte Lage verschwenkt. Der Hebel 20 ist mittels eines Gelenkes 22 ortsfest gelagert und zieht bei seiner Schwenkbewegung den Hebel 19 und dadurch den Transportwagen 5 mit sich.

Durch die direkte Anlenkung des Wagens 5 an den Hebel 19 verschiebt sich der Wagen 5 um ein Teilstück der Länge des Langloches 28, bevor sich die übrigen Transportwagen 6-8 zusammen mit dem Wagen 5 auch nach rechts bewegen. Der Grund für diese ungleichen Verschiebewege der Wagen liegt darin, dass nur die Knüppel, welche zwischen den Strängen 1 und 2 liegen, einen ganzen Abstand d nach rechts verschoben werden, da sonst ein Knüppel von seiner Ausgangslage, beispielsweise der Knüppel des Stranges 4, genau auf die Ausgangslage eines Knüppels des Stranges 3 zu liegen kommen würde. Der Unterschied in den Verschiebewegen ist gleich der Länge e des Langloches 28 und ist genau der Quotient aus dem Strangabstand d und der Anzahl von Strängen. Der Verschiebeweg der Wagen 6-8 beträgt daher $s = d \cdot (N-1)/N$.

Eine Alternativlösung zu dieser Unterschiedlichkeit der Verschiebewege wäre, alle Verschiebungen um den Weg $d \cdot N/(N+1)$ stattfinden zu lassen, vorausgesetzt, der Abstand d ist gross genug, um allen N-Knüppeln Platz zu bieten.

Die in der Endlage der Vorrichtung dargestellten Knüppel sind je nach ihrer Herkunft mit den Ordnungszahlen der jeweiligen Stränge bezeichnet und die Strichindizes beziehen sich auf nacheinanderfolgende Querschlepptakte.

Nach Giessbeginn kommen die ersten vier Knüppel aus den Strängen 1-4 in den Querförderbereich und werden durch den ersten Teilförderhub in die Positionen 1'-4' verschoben. Die Positionen $\overline{1}$-$\overline{4}$ sind nun leer, und es können vier neue Knüppel in den Querförderbereich einlaufen. Die Wagen 5-8 werden in ihre Ruhestellung zurückgeschoben, wobei die schwenkbar gelagerten Transportklinken 9-12 und die Verschiebeklinke 13 unter den im vorangehenden Takt querverschobenen Knüppeln hindurch tauchen. Beim nächsten Teilförderhub werden die vier neu angekommenen Knüppel ebenso verschoben wie vorher die ersten vier, welche nun in die Positionen 2''-4'' geschoben werden. Der Strangabschnitt 1'' wird nicht mehr erwähnt, da dessen Lage sich bereits in der zusammengeschobenen Reihe 14' der Knüppel befindet. Die Strangabschnitte 1', 2'', 3''' und 4'''' werden jeweils beim folgenden Hub mittels der Verschiebeklinke 13 in die zusammenhängende Reihe 14' geschoben, von wo sie dann mittels nicht dargestellter Vorrichtungen weiter transportiert werden.

Fig. 2 zeigt eine andere Ausführungsart der Erfindung, bei der alle Transportwagen zu einem einzigen Träger zusammengefasst sind, welcher alle Transportklinken um den gleichen Weg verschiebt. Diese Ausführungsart kann bei einer n-fachen Mehrstranggiessanlage eingesetzt werden, welche zwischen zwei Strängen noch genügend Platz aufweist, um das Eingreifen der Klinken zwischen zwei Knüppeln zu gewährleisten, wenn der Abstand e' der Knüppelmittelpunkte $e' = d/(N+1)$ beträgt. Der Träger 60 könnte auch aus einer Stange, einer Zugkette oder einem Seil bestehen. Durch die Hubvorrichtung, welche mit der in Fig. 1 identisch ist, wird der Träger 60 in die Position 60' verschoben, wobei die Transportklinke 12 in die gestrichelte Position 12' übergeht und den Knüppel 4 in die Lage des Knüppels 4' verschiebt. Die anderen Knüppel werden analog verschoben.

Zur Sicherung der Anlage gegen das Einführen von neu ankommenden Knüppeln in den Querförderbereich während eines Teilförderhubes ist eine Halteeinrichtung vorgesehen, welche während eines Hubes den Antrieb der bereits geschnittenen Knüppel abschaltet oder die Knüppel vor dem Querförderbereich blockiert. Eine Steuerung des Querfördertaktes ist in Abhängigkeit von den erwarteten Ankunftszeitpunkten neuer Knüppel ebenfalls denkbar und liegt im Können des Durchschnittsfachmannes.

## Patentansprüche

1. Querfördervorrichtung mit nebengeordnetem Kühlbett für eine Mehrstranggiessanlage, wobei die Querfördervorrichtung mit Transportklinken versehen und zwischen einer Ruhe- und Endstellung hin und her bewegbar ist, dadurch gekennzeichnet, dass zwischen den Ausförderlinien mindestens eine Zwischenposition für Strangabschnitte vorgesehen ist, in die der Strangabschnitt durch einen ersten Teilförderhub aus seiner Ausförderlinie gebracht und durch mindestens einen weiteren Hub über mindestens eine weitere Ausförderlinie auf das Kühlbett querverschoben wird, die Transportklinken (9-12) auf z.T. relativ zueinander bewegbaren Transportwagen (5, 6) angeordnet sind, und dass die Summe der Transportklinken in einer Klinkenreihe der Anzahl Ausförderlinien für Giessstränge (1-4) und der Anzahl Zwischenpositionen (1'-4', 2''-4'', 3'''-4''', 4'''') entspricht.

2. Querfördervorrichtung nach Anspruch 1, dadurch gekennzeichnet, dass die Transportklinken (9-12) um zu den Längsrichtungen der Knüppel parallel verlaufende Achsen schwenkbar gelagert sind, wobei sie mittels Federn oder durch Gegengewichte in eine die Knüppel ergreifende senkrechte Lage bringbar und beim Rücktransport nach einem Teilförderhub durch Verschwenken in eine waagrechte Lage unter den Knüppeln hindurch in die Ruhestellung zurückziehbar sind.

3. Querfördervorrichtung nach Anspruch 2, dadurch gekennzeichnet, dass die Transportklinken (9-12) in Gruppen ansteigender Anzahl — beginnend mit 1 für die in Querförderrichtung erste Gruppe bis zur Anzahl der Giessstränge (1-4) — unterteilt sind, und dass jede Gruppe von Transportklinken (9-12) an einem von einer der Zahl der Giessstränge entsprechenden Anzahl von untereinander verbundenen Transportwagen (5-8) angeordnet ist.

4. Querfördervorrichtung nach Anspruch 3, dadurch gekennzeichnet, dass zur Erzeugung der Teilförderhübe eine am Transportwagen (5) angreifende Hubvorrichtung vorgesehen ist.

5. Querfördervorrichtung nach Anspruch 4, dadurch gekennzeichnet, dass der Transportwagen (5) über einen Führungshebel (26) mit einem Anlenkpunkt (27) des mit allen vorderen Transportwagen (6, 7, 8) mittels einer Querstange (29) starr verbundenen Transportwagens (6) verbunden ist, und dass der Anlenkpunkt (27) oder das Lager (25) des Transportwagens (5) in einem Langloch (28) des Führungshebels (26) bewegbar ist, durch welches Langloch (28) eine Relativbewegung zwischen den Transportwagen (5 und 6) ermöglicht wird, welche Relativbewegung dem Abstand (d) zwischen benachbarten Giesssträngen (1-4) geteilt durch die Anzahl der Giessstränge entspricht.

6. Querfördervorrichtung nach Anspruch 5, dadurch gekennzeichnet, dass der Transportwagen (5) eine zusätzliche verstärkte Transportklinke (13) zum Abschieben mehrerer, vom Transportwagen (5) im vorhergehenden Hub im Bereich der Endstellung der Transportklinken (9) abgelegter Strangabschnitte (14) aufweist.

7. Querfördervorrichtung nach Anspruch 1, dadurch gekennzeichnet, dass alle Transportklinken (9-12) auf einem gemeinsamen Träger (60) angeordnet sind, und dass der Verschiebeweg aller Transportklinken (9-12) gleich ist dem Abstand $s' = d \cdot N/(N+1)$.

## Claims

1. A transverse conveyor means with a cooling bed for a multi-strand continuous casting installation arranged beside it, the transverse conveyor means being provided with drive pawls and being movable forward and backward between a rest position and an end position, characterized in that at least one intermediate position for strand sections is provided between the extraction lines, into which position the strand section is moved from its extraction line by a first partial conveying stroke and is pushed by at least one further stroke over at least one further extraction line on to the cooling bed, the drive pawls (9-12) being arranged on carriages (5, 6) which are to some extent movable relatively to each other, and in that the total number of drive pawls in a row of pawls corresponds to the number of extraction lines for cast strands (1-4) and to the number of intermediate positions (1'-4', 2''-4'', 3'''-4''', 4'''').

2. A transverse conveyor means according to Claim 1, characterized in that the drive pawls (9-12) are mounted to swivel about axes extending parallel to the longitudinal directions of the billets, the pawls being movable by means of springs or counterweights into a vertical position in which they engage the billets, and on return movement following a partial conveying stroke, being retractable into the rest position by swinging into a horizontal position below the billets.

3. A transverse conveyor means according to Claim 2, characterized in that the drive pawls (9-12) are divided into groups of increasing number starting at 1 for the first group in the direction of the transverse conveyor and rising to the number of cast strands (1-4), and in that each group of drive pawls (9-12) is arranged on one of a number of interconnected carriages (5-8), the number of which corresponds to the number of cast strands.

4. A transverse conveyor means according to Claim 3, characterized in that a stroke-imparting device, which engages the carriage (5), is provided to produce the partial conveying strokes.

5. A transverse conveyor means according to Claim 4, characterized in that the carriage (5) is connected, by way of a guide lever (26), to a linkage point (27) of the carriage (6) rigidly connected, by means of a transverse bar (29), to all of the front carriages (6, 7, 8), and in that the linkage point (27) or the bearing (25) of the carriage (5) is movable in a slot (28) in the guide lever (26), which slot (28) permits relative movement between the carriages (5 and 6), which relative movement corresponds to the distance (d) between two adjacent cast strands (1-4), divided by the number of cast strands.

6. A transverse conveyor means according to Claim 5, characterized in that the carriage (5) has an additional strengthened drive pawl (13) for shifting a plurality of strand sections (14) which, in the previous stroke, have been deposited by the carriage (5) in the zone of the end position of the drive pawls (9).

7. A transverse conveyor means according to Claim 1, characterized in that all of the drive pawls (9-12) are arranged on a common carrier (60), and in that the path along which all of the drive pawls (9-12) are displaced is equal to the distance s' = d · N/(N+1).

## Revendications

1. Dispositif de ripage à refroidissoir juxtaposé pour une installation de coulée continue à plusieurs lignes, dispositif qui comprend des cliquets de transport et est déplaçable entre une position de repos et une position terminale, caractérisé en ce que, au moins, une position intermédiaire est prévue pour des sections de barre entre les lignes d'évacuation, position à laquelle la section de barre peut être amenée par une première course de transport partielle depuis sa ligne d'évacuation, et à partir de laquelle la section de barre est déplacée latéralement jusque sur le refroidissoir par au moins une course partielle supplémentaire si elle doit passer par au moins une autre ligne d'évacuation, en ce que les cliquets de transport (9-12) sont disposés sur des chariots de transport (5, 6) qui sont en partie déplaçables l'un par rapport à l'autre et en ce que la somme des cliquets de transport dans une rangée de cliquets correspond au nombre des lignes d'évacuation pour les barres coulées (1-4) et au nombre des positions intermédiaires (1'-4', 2''-4'', 3'''-4''', 4'''').

2. Dispositif selon la revendication 1, caractérisé en ce que les cliquets de transport (9-12) sont montés basculants autour d'axes parallèles aux directions longitudinales des billettes, les cliquets pouvant être amenés par des ressorts ou des contrepoids à une position verticale où ils saisissent les billettes, et pouvant être rappelés à la position de repos, à la suite d'une course de transport partielle, par basculement en position horizontale et par passage sous les billettes.

3. Dispositif selon la revendication 2, caractérisé en ce que les cliquets de transport (9-12) sont partagés en groupes dont le nombre de cliquets croît, à commencer par 1 pour le premier groupe dans la direction de transport transversal jusqu'au nombre des barres coulées (1-4), et que chaque groupe de cliquets de transport (9-12) est disposé sur l'un de plusieurs chariots de transport (5-8) reliés entre eux et dont le nombre correspond au nombre des barres coulées.

4. Dispositif selon la revendication 3, caractérisé en ce qu'un dispositif de déplacement attaquant l'un (5) des chariots de transport est prévu pour produire les courses de transport partielles.

5. Dispositif selon la revendication 4, caractérisé en ce que ce chariot de transport (5) est relié par l'intermédiaire d'une barre de guidage (26) à un point d'attelage (27) d'un chariot de transport (6) qui est relié rigidement, au moyen d'une barre transversale (29), à tous les chariots de transport (7, 8) situés à l'avant, et en ce que le point d'attelage (27) ou un palier (25) du chariot de transport (5) mentionné en premier est disposé mobile dans un trou oblong (28) de la barre de guidage (26), ce trou oblong (28) permettant un mouvement relatif, entre les chariots de transport (5 et 6) concernés, qui correspond à la distance entre deux barres coulées voisines (1-4) divisée par le nombre de barres coulées.

6. Dispositif selon la revendication 5, caractérisé en ce que le chariot de transport (5) mentionné en premier porte un cliquet de transport (13) supplémentaire qui est renforcé et qui est destiné à l'évacuation de plusieurs sections de barre (14) déposées par ce chariot (5) dans la région de la position terminale des cliquets de transport (9) lors de la course partielle précédente.

7. Dispositif selon la revendication 1, caractérisé en ce que tous les cliquets de transport (9-12) sont disposés sur une poutre ou sur un autre support commun (60) et en ce que le parcours de déplacement de tous les cliquets (9-12) est égal à la distance s' = d · N/(N+1).

Fig. 1

Fig. 2